# EUROPÄISCHE PATENTSCHRIFT

(11) **EP 1 155 885 B1**
(45) Veröffentlichungstag und Bekanntmachung des Hinweises auf die Patenterteilung: **21.06.2006**
(21) Anmeldenummer: 01107739.3
(22) Anmeldetag: 02.04.2001
(51) Int. Cl.: B60H 1/00

(54) **Stellantriebssystem**
Actuator system
Système d'actionneurs

(30) Priorität: 17.05.2000 DE 10024216
(43) Veröffentlichungstag der Anmeldung: 21.11.2001
(73) Patentinhaber: Volkswagen Aktiengesellschaft, 38436 Wolfsburg (DE)
(72) Erfinder: Degenhardt, Wolfgang, 38524 Sassenburg (DE)
(74) Vertreter: Zucker, Volker

(56) Entgegenhaltungen:
- DE-A- 4 327 537
- DE-A- 19 621 272
- DE-A- 19 828 259
- FR-A- 1 332 743
- US-A- 5 637 933
- US-A- 5 791 981

## Beschreibung

Die Erfindung betrifft ein Stellantriebssystem zum Verstellen einer Mehrzahl von Klappen, insbesondere in Klimaeinrichtungen von Kraftfahrzeugen, mit den Klappen jeweils vorgelagerten, universellen Stellantrieben, die über einen Bus ansteuerbar sind.

Allgemeiner gesagt betrifft die Erfindung außerdem ein Verfahren zur Erkennung von universellen busfähigen Stellantrieben sowie ein entsprechendes Stellantriebssystem, bei der eine Erkennung der Einbauposition und Zuordnung eines Stellantriebs durch automatische Ermittlung vorgegebener spezifischer mechanischer Randbedingungen, insbesondere des verfügbaren Verstellweges, erfolgt.

Die Erfindung betrifft weiterhin ein Verfahren zur Erkennung von universellen, busfähigen Stellantrieben, denen jeweils eine bestimmte Klappe einer Mehrzahl von Klappen, insbesondere von Klimaeinrichtungen in Kraftfahrzeugen, zugeordnet ist.

Die Funktionen von Klimaeinrichtungen in Fahrzeugen werden fortlaufend erweitert. Diese Entwicklung macht es erforderlich auch die Verkabelung im Hinblick auf Gewicht und Montageaufwand zu optimieren. Die Stellantriebe zum Verstellen einer Mehrzahl von Klappen, wie sie in diesen Klimaeinrichtungen installiert sind, werden zunehmend mit Bussystemen angesteuert. Dabei tritt das Problem auf, dass dem einzelnen Stellantrieb die zugehörige Klappe bekannt gemacht werden muss, damit ein entsprechendes Befehlswort von dem richtigen Antrieb aufgenommen und umgesetzt wird.

Aus der FR 1 332 743 A ist ein Regelwiderstand bekannt, der Bestandteil einer manuellen Bedienvorrichtung für die Belüftungsanlage eines Kraftfahrzeugs ist, bei der mechanische Größen, beispielsweise Klappen, mechanisch durch den Fahrer mittels Muskelkraft mit Hilfe von Hebeln verstellt werden können, wobei zur Übertragung der manuellen Antriebskräfte von den Hebeln auf die Klappen in Hüllen verlaufende Seilzüge verwendet werden. Eine solche Vorrichtung ist für den Benutzer hinsichtlich der Bedienbarkeit eher unkomfortabel, da sie ihn zum manuellen Aufbringen eigener Kraft zwingt und keine selbsttätigen Funktionen der Stellelemente vorsieht.

Aus der DE 195 07 039 A1 ist eine elektrische Verbindungsanordnung mit einem Bus bekannt, bei der eine Vielzahl elektrischer Verbraucher mit einem Energieversorgungssystem verbunden sind. Zur Überwachung und Steuerung einzelner Verbraucher weist jeder Verbinder dieser Anordnung einen Leistungsschalter auf, der die Energieversorgung zu dem zugeordneten Verbraucher steuert. Diese Anordnung hat den Nachteil, dass eine Vielzahl von zusätzlichen Bauteilen erforderlich ist, was einen erhöhten Aufwand bedeutet.

Aus der DE 43 27 537 C2 ist ein serielles Bussystem mit Daisy-Chain-Busstruktur zur Übertragung von Sensorinformationen bekannt. Mit dieser Anordnung von in Reihe geschalteten Bauelementen können zwar Leitungen eingespart werden, jedes Bauelement benötigt aber nicht nur einen Eingang, sondern zusätzlich einen Ausgang, wodurch erhöhte Kosten verursacht werden. Zudem wirkt sich nachteilig aus, dass bei Ausfall eines Bauelementes auch alle nachgeschalteten Bauelemente mit ausfallen.

Weiterhin ist ein Stellantriebssystem bekannt, bei dem die einzelnen Stellantriebe vorprogrammiert sind. Diese Anordnung bietet Vorteile im Hinblick auf Verkabelung und Montagezeit. Jeder Antrieb ist dann aber ein spezielles Teil, das sich nur durch die Codierung unterscheidet. Dies hat für Montage und Kundendienst den Nachteil, dass die Stellantriebe nicht vertauscht werden dürfen und nicht beliebig ersetzbar sind.

Bekannt ist auch eine Anordnung, bei dem die universellen Stellantriebe über einen speziellen Leitungsstrang codiert werden. Nachteilig wirkt sich hierbei aus, dass ein erhöhter Aufwand für die Verkabelung entsteht.

Weiterhin ist ein Stellantriebssystem bekannt, bei dem die einzelnen Stellantriebe nacheinander eingebaut, verkabelt und codiert werden. Hier können zwar universelle Stellantriebe verwendet werden, das Verfahren hat aber den Nachteil, dass bei der Montage dauernd wechselnde Tätigkeiten vorgenommen werden müssen, was den Aufwand erhöht. Nachteilig wirkt sich hierbei zudem aus, dass die Reparatur bei mehreren defekten Antrieben für den Kundendienst sehr aufwendig wird.

Aufgabe der vorliegenden Erfindung ist es daher, ein Stellantriebssystem, insbesondere für eine Klimaeinrichtung in Kraftfahrzeugen, mit universellen, busfähigen Stellantrieben so zu verbessern, dass die Zuordnung für die Ansteuerung der einzelnen Stellantriebe mit der jeweils zugehörigen Klappe über einen Bus einfacher und kostengünstiger gestaltet wird.

Die Aufgabe wird durch die in dem Patentanspruch 1 angegebene Ausführungsform der Erfindung gelöst. Vorteilhafte Ausgestaltungen der Erfindung sind in den Unteransprüchen angegeben. Durch die Kombination von Klappen und Stellantrieben mit vorgegebenen unterschiedlichen mechanischen Randbedingungen ist eine Zuordnung von Klappen und zugehörigen Stellantrieben ohne zusätzliche Bauelemente oder Leitungen möglich.

Die erfindungsgemäße Anordnung hat den Vorteil, dass die Montage vereinfacht und dabei gleichzeitig der Aufwand für die Verkabelung minimiert wird. Für den Kundendienst wird der Aufwand für Reparaturen verringert, da universelle Stellantriebe Verwendung finden.

Gemäß einer bevorzugten Ausführungsform der Erfindung weist jeder Stellantrieb eine Blockiererkennung auf. Dadurch wird dem einzelnen Stellantrieb der Anschlag beim Verstellen einer Klappe entsprechend den mechanischen Einbauverhältnissen der Klappe signalisiert.

Nach einer weiteren bevorzugten Ausführungsform der Erfindung weist die Software eine Tabelle - mit einem ersten Satz von Zuordnungsgrößen zur Zuordnung eines Verstellweges zu einer bestimmten Klappe in einer ersten Drehrichtung auf. Durch einen Vergleich gemessener mit in der Tabelle vorgegebenen Verstellwegen lässt sich auf einfache Weise eine Zuordnung von Klappe und Stellantrieb vornehmen.

Nach einer weiteren bevorzugten Ausführungsform der Erfindung weist die Software einen zweiten Satz von Zuordnungsgrößen zur Zuordnung eines Verstellweges zu einer bestimmten Klappe in einer zweiten Drehrichtung auf. Dadurch kann die Anzahl der zuordenbaren Klappen erhöht werden.

Gemäß einer weiteren bevorzugten Ausführungsform der Erfindung weist die Software eine Fehlererkennung auf. Dadurch kann bei nicht eindeutiger Erkennung einer Klappe mit seinem Stellantrieb eine Fehlfunktion bei der Ansteuerung frühzeitig diagnostiziert werden.

Die bekannten Verfahren zur Erkennung von universellen, busfähigen Stellantrieben für Klappen in Klimaeinrichtungen in Kraftfahrzeugen haben den Nachteil, dass sie nicht kostengünstig und mit erhöhtem Aufwand für Montage und Kundendienst verbunden sind.

Weitere Aufgabe der Erfindung ist es daher, ein Verfahren zur Erkennung von universellen, busfähigen Stellantrieben zu finden, dass kostengünstig und mit geringem Montage- und Kundendienstaufwand verbunden ist.

Die Aufgabe wird durch die in dem Patentanspruch 6 angegebene Ausführungsform der Erfindung gelöst. Dadurch, dass mit einer über den Bus gestarteten Lernphase jeder Stellantrieb mit seiner zugehörigen Klappe identifiziert wird, wird die Montagezeit verringert. Weiterhin wird die Reparatur bei Funktionsstörungen für den Kundendienst vereinfacht.

Gemäß einer bevorzugten Ausführungsform der Erfindung wird an jedem Stellantrieb des Stellantriebssystems eine einheitliche Abtriebsstellung einjustiert. Diese einheitliche Abtriebsstellung gilt als Nullstellung für die Lernphase. Durch die einheitliche Abtriebsstellung wird die Zuordnung vereinfacht, da auf die Abtriebsstellung definierende Daten durch die gleiche Stellung verzichtet werden kann.

Nach einer weiteren bevorzugten Ausführungsform der Erfindung wird jede Klappe aus einer anderen vorgegebenen Ausgangsstellung der Antriebsachse um einen anderen Verstellwinkel in einer definierten Drehrichtung bis zu einem ersten Anschlag in einem Klappenkasten verfahren, woraus die Software eine erste Zuordnungsgröße bildet. Dadurch lässt sich auf einfache Weise durch einen Vergleich gemessener mit in der Tabelle vorgegebenen Verstellwegen eine Zuordnung von Klappe und Stellantrieb vornehmen.

Nach einer weiteren bevorzugten Ausführungsform der Erfindung wird jede Klappe nach Erreichen des ersten Anschlags in entgegengesetzter Drehrichtung bis zu einem entgegengesetzten Anschlag des Klappenkastens verfahren, woraus die Software eine zweite Zuordnungsgröße bildet. Die Anzahl der zuordenbaren Klappen kann dadurch erhöht werden.

Gemäß einer weiteren bevorzugten Ausführungsform der Erfindung wird nach erfolgter eindeutiger Zuordnung anhand der Zuordnungsgrößen eine entsprechende Meldung über den Bus ausgegeben, andernfalls erfolgt eine Fehlermeldung. Dadurch kann die korrekte Arbeitsweise des Stellantriebssystems abgesichert werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

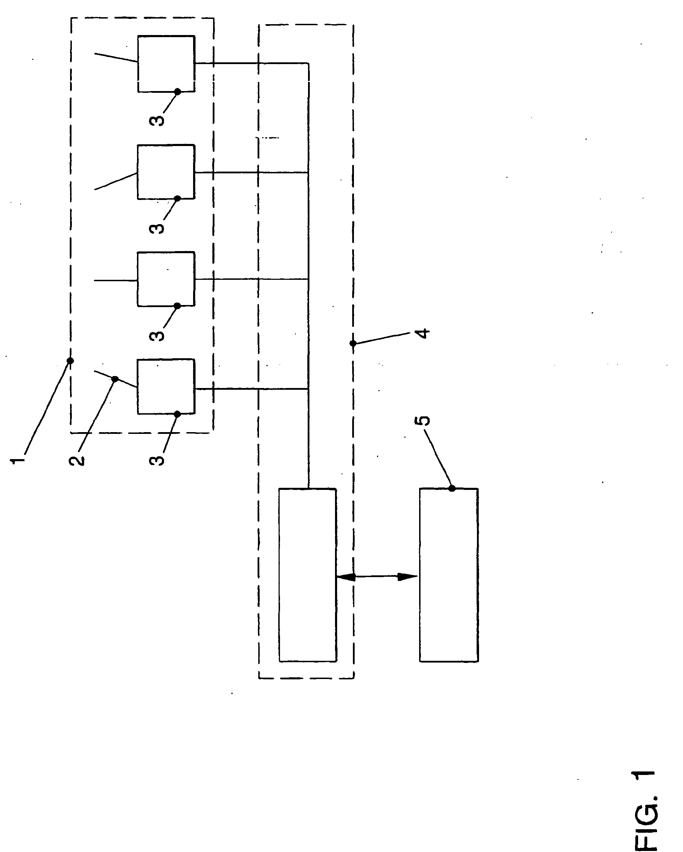

- Figur 1:: Eine schematische Darstellung eines Stellantriebssystems mit Bus,

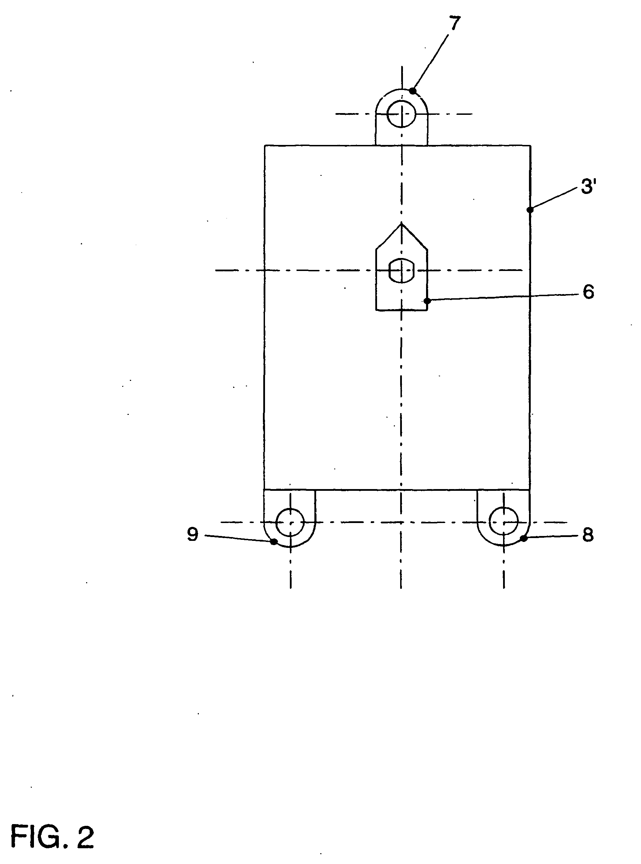

- Figur 2:: eine Seitenansicht eines Stellantriebes,

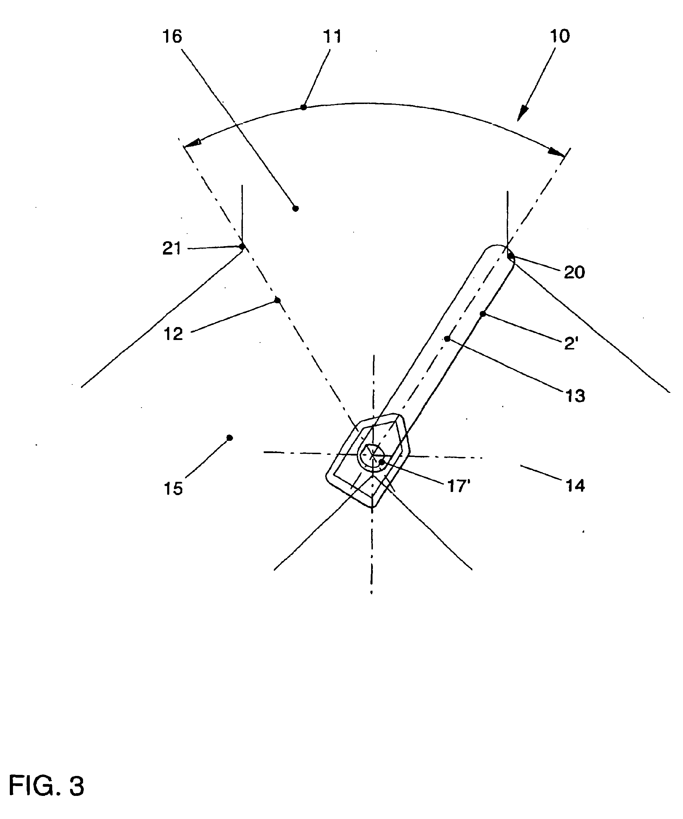

- Figur 3:: eine Seitenansicht eines Klappenkastens mit einer Klappe,

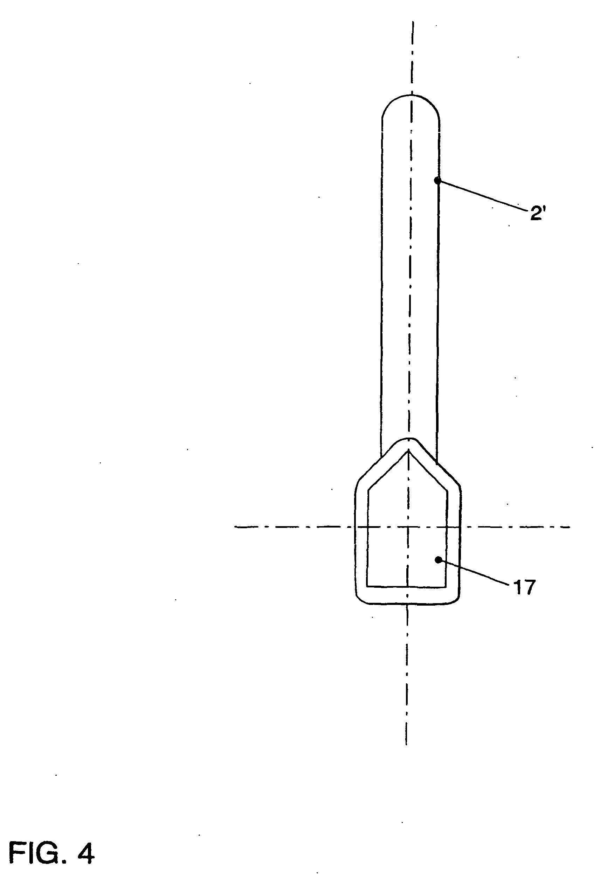

- Figur 4:: eine Seitenansicht der Klappe von Figur 3,
- Figur 5:: eine Seitenansicht eines Stellantriebes mit 90° Einbauwinkel,
- Figur 6:: eine Seitenansicht eines Stellantriebes mit alternativem Einbauwinkel zu Figur 5 und
- Figur 7:: eine Seitenansicht eines Stellantriebes mit alternativem Klappenkasten zu den Figuren 5 und 6.

Ein Stellantriebssystem 1 in Klimaeinrichtungen von Kraftfahrzeugen besteht im wesentlichen aus einer Mehrzahl von universellen Stellantrieben 3 mit einer speziellen Software und den zugehörigen Klappen 2, die über einen Bus 4 von einer Steuer- und Kontrolleinheit 5 angesprochen werden.

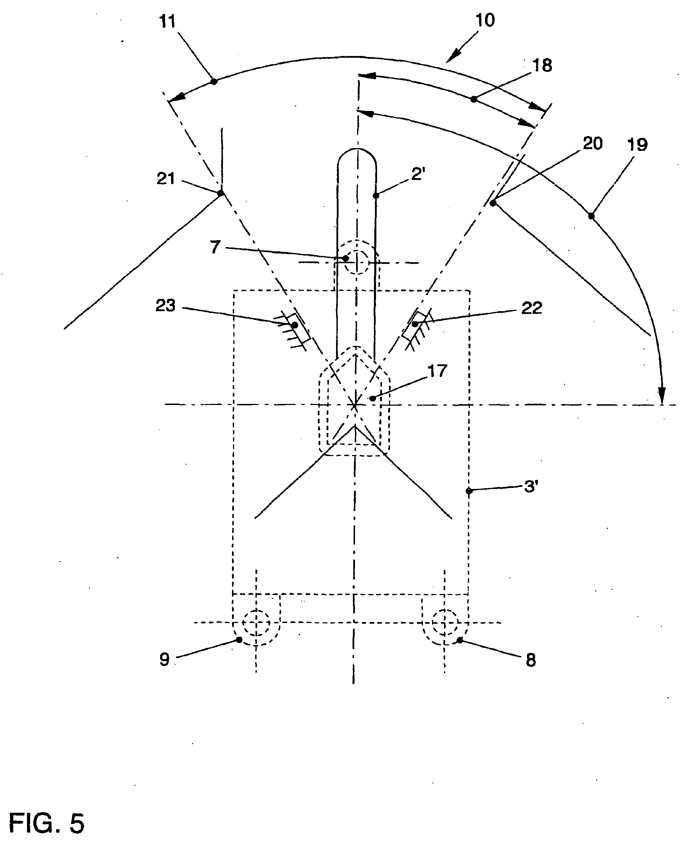

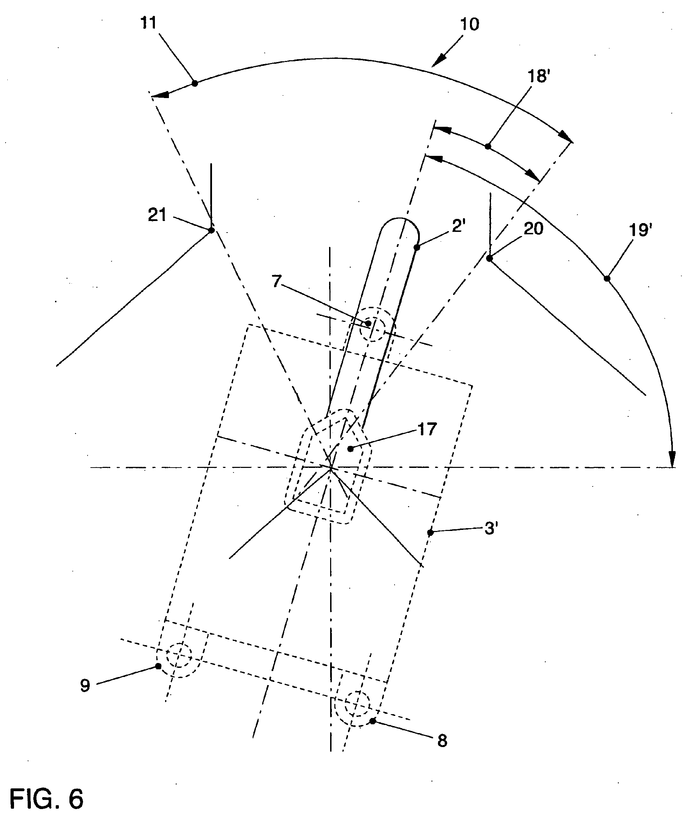

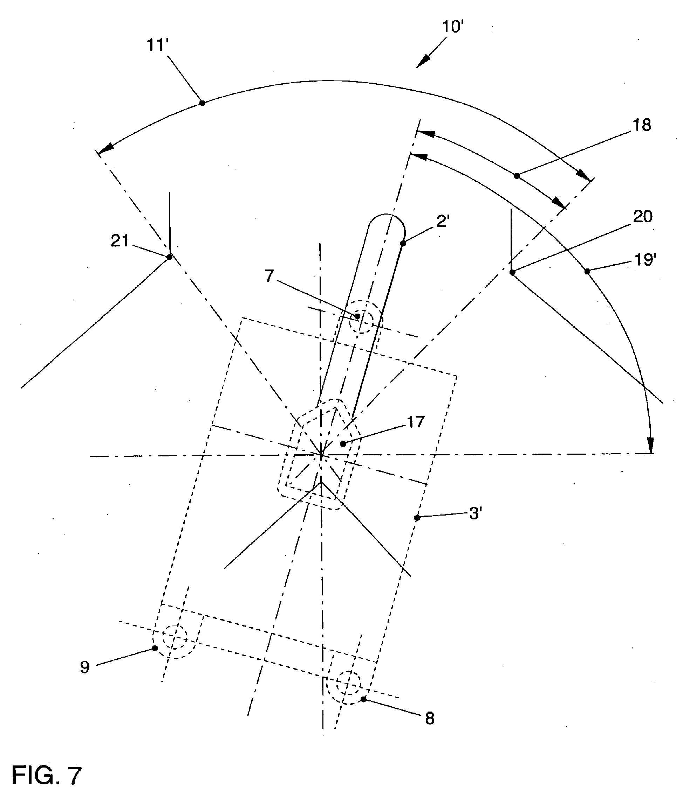

Der Stellantrieb 3' besitzt ein Abtriebselement 6 mit einer definierten, d.h. festen, Lage und weist drei Befestigungselemente 7,8,9 auf. Die Klappe 2' weist eine Aufnahme 17 für das Abtriebselement 6 auf. Der Klappenkasten 10 besitzt für die durchströmende Luft einen Einlass 16, sowie zwei Auslasse 14,15. Der Stellantrieb 3' des Stellantriebssystems 1 wird innerhalb des Winkelsektors des Gesamtverstellwinkels 11 in den Klappenkasten 10, mit einem vordefinierten Einbauwinkel 19 eingebaut. Die Befestigungen in den Klappenkästen sind so ausgelegt, dass sich unter Berücksichtigung einer Klappentoleranz unterschiedliche Einbaupositionen ergeben. Dabei ist wichtig, dass für jede Klappe die Kombination aus vordefiniertem Einbauwinkel 19, woraus sich ein Verstellwinkel 18 (Zuordnungsgröße 1) ergibt und dem Gesamtverstellwinkel 11 (Zuordnungsgröße 2) nur einmal vorkommt. In den Figuren 5 bis 7 sind exemplarisch drei verschiedene Einbaupositionen, die in der folgenden Tabelle numerisch aufgeführt sind, dargestellt.

| | Figur 5 | Figur 6 | Figur 7 |
|---|---|---|---|
| Zuordnungsgröße 1 | 30° (18) | 20° (18') | 30° (18) |
| Zuordnungsgröße 2 | 60° (11) | 60° (11) | 80° (11') |

Die Erfindung beschränkt sich nicht nur auf die in den Figuren gezeigten mechanischen Randbedingungen. Es sind auch andere Einbauverhältnisse, etwa mit linearen Verstellwegen möglich.

Ein Verfahren zur Erkennung von universellen, busfähigen Stellantrieben 3' in Klimaeinrichtungen von Kraftfahrzeugen, denen jeweils eine bestimmte Klappe 2' einer Mehrzahl von Klappen, zugeordnet ist, beruht im wesentlichen auf einer über einen Bus 4 gestarteten Lernphase, bei der jede Klappe 2' um einen anderen vordefinierten Verstellweg 18 bzw. 11 verfahren wird, und einem anschließenden Vergleich der gemessenen Verstellwege mit den in einer speziellen Software der Stellantriebe 3' für jede Klappe 2' gespeicherten vordefinierten Werten.

Zunächst werden die universellen Stellantriebe 3' in die Klimaeinrichtung mit den vorgegebenen Einbaupositionen der Klappen eingebaut und verkabelt. Anschließend wird über den Bus 4 die Lernphase gestartet. Zunächst fahren alle Stellantriebe in einer definierten Drehrichtung bis zum ersten Anschlag 20, der der ersten Klappenposition 13 entspricht. Der Anschlag wird dabei von der internen Blockiererkennung festgestellt. Die gemessene Schrittzahl entspricht dem Verstellwinkel 18. Dieser bildet die erste Zuordnungsgröße. Danach fahren alle Stellantriebe in entgegengesetzter Drehrichtung bis zum zweiten Anschlag 21, in die Klappenposition 12. Die zweite gemessene Schrittzahl, entspricht dann dem Gesamtverstellwinkel 19. Dieser Gesamtverstellwinkel bildet die zweite Zuordnungsgröße. Die beiden Zuordnungsgrößen werden anschließend mit der Tabelle der Software verglichen, woraus sich der Einbauort, d.h. die jeweilige Klappe 2' identifizieren lässt. Der zugehörige Stellantrieb 3' meldet dann seine Klappennummer über den Bus 4 an die Steuer- und Kontrolleinheit 5. Der erste Anschlag 20 kann aus Stabilitätsgründen auch als ein in der Nähe der Aufnahme 17 angeordneter Hilfsanschlag 22 ausgebildet sein. Dies gilt entsprechend auch für den zweiten Anschlag 21 der als Hilfsanschlag 23 ausgebildet sein kann.

Am Ende der Lernphase ist jeder Stellantrieb 3' erkannt und nunmehr gezielt ansteuerbar. Jede Klappennummer muss genau einmal vorhanden sein. Sollte aufgrund eines Einbaufehlers eine Zuordnung nicht eindeutig oder gar nicht erfolgt sein, wird mit Hilfe der Fehlererkennung eine entsprechende Meldung über den Bus 4 ausgegeben.

### BEZUGSZEICHENLISTE

- 1: Stellantriebssystem
- 2,2': Klappe
- 3,3': Stellantrieb
- 4: Bus
- 5: Steuer- und Kontrolleinheit
- 6: Abtriebselement
- 7: 1. Befestigungselement des Stellantriebes
- 8: 2. Befestigungselement des Stellantriebes
- 9: 3. Befestigungselement des Stellantriebes
- 10,10': Klappenkasten
- 11,11': Zuordnungsgröße 2 (Gesamtverstellwinkel)
- 12: Klappenposition 2
- 13: Klappenposition 1
- 14: Auslass 2
- 15: Auslass 1
- 16: Einlass
- 17,17': Aufnahme für Abtriebselement
- 18,18': Zuordnungsgröße 1 (Verstellwinkel)
- 19,19': Einbauwinkel des Stellantriebes
- 20: Anschlag 1
- 21: Anschlag 2
- 22: Hilfsanschlag 1
- 23: Hilfsanschlag 2

## Patentansprüche

1. Stellantriebssystem (1) zum Verstellen einer Mehrzahl von Klappen, insbesondere in Klimaeinrichtungen von Kraftfahrzeugen,
- mit den Klappen (2,2') jeweils vorgelagerten, universellen Stellantrieben (3,3'),
- die über einen Bus (4) ansteuerbar sind,
- wobei die Klappen (2,2') in Kombination mit den Stellantrieben (3,3') untereinander vorgegebene unterschiedliche mechanische Randbedingungen aufweisen, **dadurch** gekenzeichnet, daß
- die Stellantriebe (3,3') eine spezielle Software aufweisen,
- mit der jeder Stellantrieb (3,3') als einer bestimmten Klappe (2,2') zugeordnet, erkennbar ist.

2. Stellantriebssystem (1) nach Anspruch 1, **dadurch gekennzeichnet, dass** jeder Stellantrieb (3,3') eine Blockiererkennung aufweist.

3. Stellantriebssystem (1) nach einem der Ansprüche 1 oder 2, **dadurch gekennzeichnet, dass** die Software eine Tabelle mit einem ersten Satz von Zuordnungsgrößen zur Zuordnung eines Verstellweges (18,18') zu einer bestimmten Klappe (2,2') in einer ersten Drehrichtung aufweist.

4. Stellantriebssystem (1) nach Anspruch 3, **dadurch gekennzeichnet, dass** die Software eine Tabelle mit einem zweiten Satz von Zuordnungsgrößen zur Zuordnung eines Verstellweges (11,11') zu einer bestimmten Klappe (2,2') in einer zweiten Drehrichtung aufweist.

5. Stellantriebssystem (1) nach einem der Ansprüche 1 bis 4, **dadurch gekennzeichnet, dass** die Software eine Fehlererkennung bei nicht eindeutiger Klappenzuordnung aufweist.

6. Verfahren zur Erkennung von universellen, busfähigen Stellantrieben (3,3'), denen jeweils eine bestimmte mechanische Größe (2,2') einer Mehrzahl von mechanischen Größen (2,2') zugeordnet ist, **dadurch gekennzeichnet, daß** in den Stellantrieben (3,3') eine Lernphase auslösbar ist, bei der die mechanischen Größen (2,2') um jeweils einen vordefinierten Verstellweg verfahren werden und hierbei die einem Stellantrieb (3,3') jeweils zugeordnete mechanische Größe (2,2') erkannt wird.

7. Verfahren nach Anspruch 6, zur Erkennung von universellen, busfähigen Stellantrieben (3,3'), denen jeweils eine bestimmte Klappe (2,2') einer Mehrzahl von Klappen, insbesondere von Klimaeinrichtungen in Kraftfahrzeugen, zugeordnet ist, **dadurch gekennzeichnet, dass** von jedem Stellantrieb (3,3') über eine spezielle Software durch eine über einen Bus (4) gestartete Lernphase, bei der jede Klappe (2,2') um einen anderen vordefinierten Verstellweg verfahren wird, jeweils die ihm zugeordnete Klappe (2,2') erkannt wird.

8. Verfahren nach Anspruch 6 oder 7, **dadurch gekennzeichnet, dass** an den Stellantrieben (3,3') eine vorgegebene einheitliche Abtriebstellung eines Abtriebselementes (6) eingestellt wird.

9. Verfahren nach einem der Ansprüche 6 bis 8, **dadurch gekennzeichnet, dass** jede Klappe (2,2') aus einer anderen Ausgangsstellung (19,19') der Antriebsachse um einen anderen Verstellwinkel (18,18')in einer definierten Drehrichtung bis zu einem ersten Anschlag (20) in einem Klappenkasten (10) verfahren wird, woraus die Software eine erste Zuordnungsgröße bildet.

10. Verfahren nach Anspruch 9, **dadurch gekennzeichnet, dass** jede Klappe nach Erreichen des ersten Anschlags (20, 22) in entgegengesetzter Drehrichtung bis zu einem entgegengesetzten Anschlag (21, 23) des Klappenkastens (10) verfahren wird, woraus die Software eine zweite Zuordnungsgröße bildet.

11. Verfahren nach einem der Ansprüche 6 bis 10, **dadurch gekennzeichnet, dass** nach erfolgter eindeutiger Zuordnung anhand der Zuordnungsgrößen eine entsprechende Meldung über den Bus (4) ausgegeben wird, andernfalls eine Fehlermeldung ausgegeben wird.

## Claims

1. Actuating drive system (1) for the adjustment of a plurality of flaps, in particular in automotive air conditioning systems,
- with universal actuating drives (3,3') mounted ahead of the flaps (2,2') in each case,
- which are capable of being controlled via a bus (4),
- in conjunction with which the flaps (2,2') in combination with the actuating drives (3,3') exhibit mutually different set mechanical boundary conditions, **characterized in that**
- the actuating drives (3,3') exhibit a special software,
- with which every actuating drive (3,3') is recognizable as being allocated to a discrete flap (2,2').

2. Actuating drive system (1) according to Claim 1, **characterized in that** each actuating drive (3,3') exhibits a blockage detector.

3. Actuating drive system (1) according to one of Claims 1 or 2, **characterized in that** the software exhibits a table with a first set of allocation values for the allocation of an adjustment path (18,18') to a particular flap (2,2') in a first direction of rotation.

4. Actuating drive system (1) according to Claim 3,
**characterized in that** the software exhibits a table with a second set of allocation values for the allocation of an adjustment path (11,11') to a particular flap (2,2') in a second direction of rotation.

5. Actuating drive system (1) according to one of Claims 1 to 4, **characterized in that** the software exhibits a means of error detection in the event of the allocation of a flap being unclear.

6. Method for the recognition of universal, bus-enabled actuating drives (3,3'), to each of which a specific mechanical value (2,2') taken from a plurality of mechanical values (2,2') is allocated, **characterized in that** a learning phase can be triggered in the actuating drives (3,3'), in which the mechanical values (2,2') are caused to move in each case along a predefined adjustment path and, in conjunction with this, the mechanical value (2,2') allocated to an actuating drive (3,3') in each case is recognized.

7. Method according to Claim 6 for the recognition of universal, bus-enabled actuating drives (3,3'), to each of which a specific flap (2,2') taken from a plurality of flaps is allocated, in particular for automotive air conditioning systems, **characterized in that** the flap (2,2') allocated to it in each case is recognized for each actuating drive (3,3') by a special software via a learning phase started by a bus (4), in which every flap (2,2') is caused to move along a second predefined adjustment path.

8. Method according to Claim 6 or 7, **characterized in that** a given uniform drive setting for a drive element (6) is set for the actuating drives (3, 3').

9. Method according to one of Claims 6 to 8,
**characterized in that** each flap (2,2') is caused to move from a second starting position (19,19') of the drive shaft via a second adjustment angle (18,18') in a defined direction of rotation before making initial contact with a stop (20) in a flap box (10), from which the software produces an initial allocation value.

10. Method according to Claim 9, **characterized in that** each flap, after arriving at the first stop (20, 22), is caused to move in the opposite direction of rotation before making contact with an opposing stop (21, 23) in the flap box (10), from which the software produces a second allocation value.

11. Method according to one of Claims 6 to 10,
**characterized in that**, after the completion of clear allocation on the basis of the allocation values, a corresponding message is generated via the bus (4), failing which an error message is generated.

## Revendications

1. Système de mécanisme de positionnement (1) pour positionner une pluralité de clapets, notamment dans les équipements de climatisation des véhicules automobiles,
- comprenant des mécanismes de positionnement universels (3, 3') à chaque fois montés devant les clapets (2, 2'),
- lesquels peuvent être commandés par le biais d'un bus (4),
- les clapets (2, 2') combinés avec les mécanismes de positionnement (3, 3') présentant des conditions limites mécaniques différentes prédéfinies entre elles, **caractérisé en ce que**
- les mécanismes de positionnement (3, 3') présentent un logiciel spécial,
- avec lequel chaque mécanisme de positionnement (3, 3') est identifiable comme étant associé à un clapet (2, 2') donné.

2. Système de mécanisme de positionnement (1) selon la revendication 1, **caractérisé en ce que** chaque mécanisme de positionnement (3, 3') présente un identifiant de blocage.

3. Système de mécanisme de positionnement (1) selon l'une des revendications 1 ou 2, **caractérisé en ce que** le logiciel présente une table avec un premier jeu de grandeurs d'affectations pour affecter une course de positionnement (18, 18') à un clapet (2, 2') donné dans un premier sens de rotation.

4. Système de mécanisme de positionnement (1) selon la revendication 3, **caractérisé en ce que** le logiciel présente une table avec un deuxième jeu de grandeurs d'affectations pour affecter une course de positionnement (11, 11') à un clapet (2, 2') donné dans un deuxième sens de rotation.

5. Système de mécanisme de positionnement (1) selon l'une des revendications 1 à 4, **caractérisé en ce que** le logiciel présente un identifiant de défauts en cas d'affectation non explicite d'un clapet.

6. Procédé de détection de mécanismes de positionnement (3, 3') universels pouvant fonctionner sur un bus auxquels est à chaque fois associée une grandeur mécanique (2, 2') donnée parmi une pluralité de grandeurs mécaniques (2, 2'), **caractérisé en ce qu'**une phase d'apprentissage peut être déclenchée dans les mécanismes de positionnement (3, 3') au cours de laquelle les grandeurs mécaniques (2, 2') parcourent à chaque fois une course de positionnement prédéfinie et la grandeur mécanique (2, 2') à chaque fois associée à un mécanisme de positionnement (3, 3') est ainsi identifiée.

7. Procédé selon la revendication 6 de détection de mécanismes de positionnement (3, 3') universels pouvant fonctionner sur un bus auxquels est à chaque fois associé - un clapet (2, 2') donné parmi une pluralité de clapets, notamment d'équipements de climatisation dans des véhicules automobiles, **caractérisé en ce que** le clapet (2, 2') associé à chaque mécanisme de positionnement (3, 3') est à chaque fois identifié par celui-ci par le biais d'un logiciel spécial au cours d'une phase d'apprentissage initiée par le biais d'un bus (4) et au cours de laquelle chaque clapet (2, 2') parcourt une autre course de positionnement prédéfinie.

8. Procédé selon la revendication 6 ou 7, **caractérisé en ce qu'**une position d'entraînement uniforme prédéfinie d'un élément d'entraînement (6) est réglée au niveau des mécanismes de positionnement (3, 3').

9. Procédé selon l'une des revendications 6 à 8, **caractérisé en ce que** chaque clapet (2, 2') est amené d'une autre position initiale (19, 19') de l'axe d'entraînement selon un autre angle de positionnement (18, 18') dans un sens de rotation défini jusqu'à une première butée (20) dans un coffret à clapets (10), à partir de quoi le logiciel calcule une première grandeur d'affectation.

10. Procédé selon la revendication 9, **caractérisé en ce que** chaque clapet, après avoir atteint la première bute (20, 22), est amené dans le sens de rotation inverse jusqu'à une butée opposée (21, 23) du coffret à clapets (10), à partir de quoi le logiciel calcule une deuxième grandeur d'affectation.

11. Procédé selon l'une des revendications 6 à 10, **caractérisé en ce qu'**après avoir effectué l'affectation non ambiguë au moyen des grandeurs d'affectation, un message correspondant est délivré par le biais du bus (4) et, le cas contraire, un message d'erreur est délivré.
